# EUROPEAN PATENT APPLICATION

(11) **EP 1 775 579 A1**
(43) Date of publication of application: **18.04.2007**
(21) Application number: 04748192.4
(22) Date of filing: 02.08.2004
(51) Int. Cl.: G01N 27/30

(54) **OXYGEN ELECTRODE**

(71) Applicant: DAIKIN INDUSTRIES, LTD., Osaka-shi, Osaka 530-8323 (JP)
(72) Inventor: AKAMATSU, Megumi, Tsukuba-shi, Ibaraki 3050481 (JP); UTSUNO, Mariko, Tsukuba-shi, Ibaraki 3050481 (JP)
(74) Representative: Goddar, Heinz J.
(86) International application number: PCT/JP2004/011059
(87) International publication number: WO 2006/013617

(57) **Abstract**

An object of the invention is to provide a structure of an oxygen electrode which can be formed with a cost enabling disposal. The invention provides an oxygen electrode (2) used to measure an amount of dissolved oxygen in a liquid culture medium. The oxygen electrode (2) according to the invention is equipped with an electrode base material (10), and a surface metal layer (13) is any one of Au, Pt, and Ti and covers a surface of the electrode base material (10). Especially, in a case where the surface metal layer (13) of Au is formed on the electrode base material (10) of copper with electroplating, a nickel layer (11) is formed on the surface of the electrode base material (10) by layering with electroplating, etc. Then, the Au layer (13) is formed on the nickel layer (11) by layering with electroplating, etc.

## Description

### Technical Field

The present invention relates to an oxygen electrode, and especially an oxygen electrode used to measure an amount of dissolved oxygen in a liquid culture medium.

### Background Art

Conventionally, there is a case where it is required to measure the number of bacteria contained in food for a purpose of a food hygiene management, etc. Until this time, a method of measuring the number of bacteria by diluting a specimen in stages, mixing and diluting each in or coating each on an agar medium at a fixed amount, culturing for about 24 to 48 hours, and visually counting the number of generated colonies , has been used generally as a method of measuring bacteria contained in a specimen such as food. However, in this method, there are problems that an operation to dilute the specimen in stages is necessary and that culturing for about 24 to 48 hours is necessary. Accordingly, a method of measuring the number of bacteria by measuring with an oxygen electrode a concentration amount of dissolved oxygen contained in a liquid culture medium to which a specimen is added (also referred to as oxygen electrode method below) was developed as disclosed in Japanese Patent Application Laid-Open No. 2000-287699 (also referred to as Patent Document below).

In the oxygen electrode method disclosed in the Patent Document, the higher the concentration of dissolved oxygen contained in a liquid culture medium is, the larger a current measured is. On the other hand, the bacteria contained in the specimen consume the dissolved oxygen in the liquid culture medium by breathing. Consequently, the current flowing in the oxygen electrode decreases as the concentration of the dissolved oxygen decreases by the breathing of bacteria. Further, A consumption amount of dissolved oxygen depends on the initial number of bacteria contained in the specimen. That is, the larger the initial number of bacteria is, the larger the amount of oxygen to be consumed becomes, and the more rapidly decrease in the concentration of dissolved oxygen becomes. A current value to be measured decreases in a short period of time as the concentration of dissolved oxygen decreases in a short period of time. From the above relationship, time required for the current flowing in the liquid culture medium decreasing to a fixed threshold value depends on the initial number of bacteria included in the specimen. Consequently, by measuring this time required for a specimen containing an unknown initial number of bacteria, the initial number of bacteria can be determined. As described above, the oxygen electrode method has a characteristic that the initial number of bacteria can be measured in a short period of time with accuracy.

However, because the oxygen electrode used in the Patent Document is formed by printing precious metal such as platinum and silver on a ceramic plate, there is a problem that a cost therefor becomes higher. Further, in a case of reusing the oxygen electrode, alcohol-sterilization is performed after washing with water. However, there is a concern that the bacteria diffuses and contaminates the surroundings when washing with water. Furthermore, although a method using pressurized steam sterilization without washing with water can be considered, because the oxygen electrode is formed by printing, there is a problem the printing is peeled when pressurized steam sterilization is used, and the oxygen electrode cannot be reused. Further, because it is common to generally dispose an item which contacts a specimen in bacteria inspection in food, etc., it is also desired to dispose the oxygen electrode.

### Disclosure of the Invention

An object of the present invention is to solve the above-described problems and provide a structure of an oxygen electrode that can be formed with low cost. Further, in a case where an Au layer is used in a surface layer as the oxygen electrode of low cost, another object of the present invention is to provide an oxygen electrode structure that can improve measurement accuracy of the amount of dissolved oxygen by suppressing generation of deficiencies thereof.

A first aspect of an oxygen electrode according to the present invention is an oxygen electrode used to measure an amount of dissolved oxygen in a liquid culture medium, and is equipped with an electrode base material and a surface metal layer is one of Au, Pt, and Ti and covers the surface of the electrode base material.

According to the first aspect of the oxygen electrode in the present invention, a material inexpensive but not suitable as a surface material of the oxygen electrode can be used in the electrode base material, and a structure inexpensively formable can be achieved.

A second aspect of the oxygen electrode according to the present invention is the oxygen electrode as in the first aspect where at least one of the surfaces of the electrode base material and the surface metal layer is processed with mechanical polishing.

According to the second aspect of the oxygen electrode in the present invention, pinholes generated in the surface metal layer can be reduced, and measurement accuracy of the amount of dissolved oxygen can be improved.

A third aspect and a fourth aspect of the oxygen electrode according to the present invention are the oxygen electrode as in the first aspect and the second aspect, equipped further with a first under layer between the electrode base material and the surface metal layer, and the surface metal layer is Au and is formed on the first under layer with electroplating.

According to the third aspect and the fourth aspect of the oxygen electrode in the present invention, the oxygen electrode can be manufactured easily and more inexpensively.

A fifth aspect and a sixth aspect of the oxygen electrode according to the present invention are the oxygen electrode as in the third aspect and the fourth aspect, wherein the first under layer is nickel.

According to the fifth aspect and the sixth aspect of the oxygen electrode in the present invention, adhesive property of the Au surface metal layer can be improved with no influence on measurement.

A seventh aspect and an eighth aspect of the oxygen electrode according to the present invention are the oxygen electrode as in the fifth aspect and the sixth aspect, wherein the surface metal layer is at least 0.3 µm.

According to the seventh aspect and the eighth aspect of the oxygen electrode in the present invention, measurement accuracy of the amount of dissolved oxygen can be improved.

A ninth aspect of the oxygen electrode according to the present invention is the oxygen electrode as in any one of the third aspect to the eighth aspect, wherein the surface of the first under layer is processed with mechanical polishing.

According to the ninth aspect of the oxygen electrode in the present invention, the pinholes generated in the surface metal layer of Au can be reduced, and measurement accuracy of the amount of dissolved oxygen can be improved.

A tenth aspect of the oxygen electrode according to the present invention is the oxygen electrode as in any one of the third aspect to the eighth aspect, wherein the first under layer is formed with electroplating performed in carbon dioxide.

According to the tenth aspect of the oxygen electrode in the present invention, the pinholes generated in the surface metal layer of Au can be reduced, and measurement accuracy of the amount of dissolved oxygen can be improved.

An eleventh aspect of the oxygen electrode according to the present invention is the oxygen electrode as in the tenth aspect, wherein the carbon dioxide is in a super-critical state.

According to the eleventh aspect of the oxygen electrode in the present invention, the pinholes generating in the surface metal layer of Au can be reduced and measurement accuracy of the amount of dissolved oxygen can be improved.

A twelfth aspect of the oxygen electrode according to the present invention is the oxygen electrode as in any one of the third aspect to the eighth aspect, equipped further with a second under layer between the first under layer and the surface metal layer, and a particle size smaller than the particle size formed on the surface of the first under layer is formed on the surface of the second under layer.

According to the twelfth aspect of the oxygen electrode in the present invention, the pinholes generated in the surface metal layer of Au can be reduced, and measurement accuracy of the amount of dissolved oxygen can be improved.

A thirteenth aspect of the oxygen electrode according to the present invention is the oxygen electrode as in the twelfth aspect, and the second under layer is any of ruthenium, rhodium, and palladium.

According to the thirteenth aspect of the oxygen electrode in the present invention, effects can be obtained such as the pinholes generated in the first under layer can be reduced, and the pinholes generated in the surface metal layer of Au can be reduced.

The objects, characteristics, aspects, and advantages of the present invention become obvious by detailed explanations and attached drawings as follows.

### Brief Description of the Drawings

FIG. 1 is a block diagram of an apparatus for measuring the number of bacteria in Embodiment 1 of the present invention.
FIG. 2 is a sectional perspective view of a cell in Embodiment 1 of the present invention.
FIG. 3 is a sectional view of an oxygen electrode in Embodiment 1 of the present invention.
FIG. 4 is a view showing a measurement result of the oxygen electrode in Embodiment 1 of the present invention.
FIG. 5 is a view showing another measurement result of the oxygen electrode in Embodiment 1 of the present invention.
FIG. 6 is a sectional view of an oxygen electrode in Embodiment 2 of the present invention.
FIG. 7 is a graph showing a measurement waveform of an amount of dissolved oxygen in Embodiment 2 of the present invention.
FIG. 8 is a graph showing another measurement waveform of the amount of dissolved oxygen in Embodiment 2 of the present invention.
FIG. 9 is a graph showing a measurement waveform of an amount of dissolved oxygen in Embodiment 3 of the present invention.
FIG. 10 is a graph showing another measurement waveform of the amount of dissolved oxygen in Embodiment 3 of the present invention.
FIG. 11 is a sectional view of an oxygen electrode in Embodiment 5 of the present invention.
FIG. 12 is another sectional view of the oxygen electrode in Embodiment 5 of the present invention.

### Best Mode for Carrying Out the Invention

### (Embodiment 1)

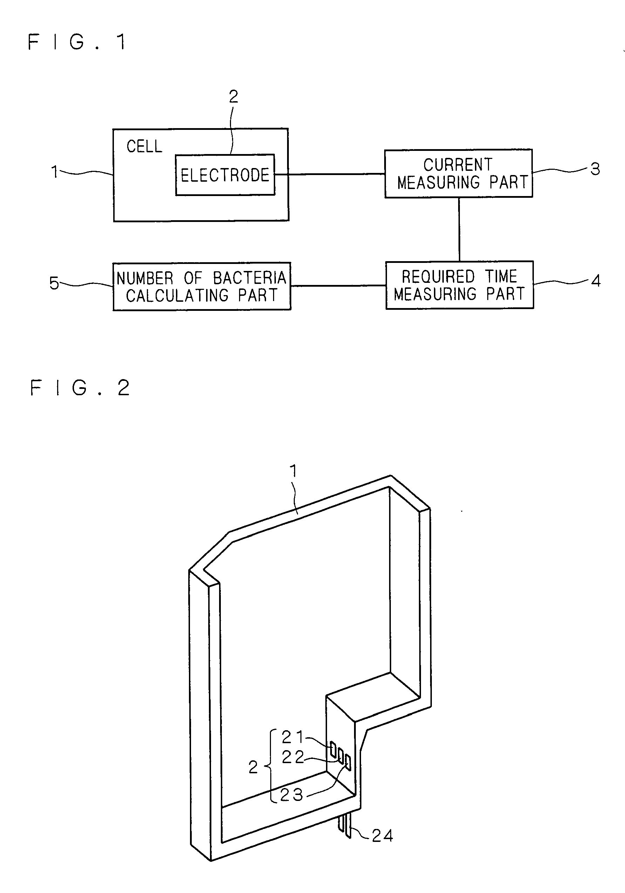

A block diagram of an apparatus for measuring the number of bacteria using an oxygen electrode in the present embodiment is shown in FIG. 1. This apparatus for measuring the number of bacteria is provided with a cell 1, and a culture medium to which a specimen is added is stored in this cell 1. Inside of the cell 1, there is provided an oxygen electrode 2 to be used in the oxygen electrode method. A sectional perspective view of the cell 1 is shown in FIG. 2. The side wall close to the base of the cell 1 is provided with the three electrodes of a counter electrode 21, a working electrode 22, and a reference electrode 23 including the oxygen electrode 2. Moreover, the cell 1 is provided with an output terminal 24 connected electrically to the counter electrode 21, the working electrode 22, and the reference electrode 23, and the oxygen electrode 2 is connected to a current measuring part 3 through the output terminal 24.

In the current measuring part 3 in FIG. 1, the current value flowing in the culture medium to which the specimen is added is measured with the oxygen electrode. Especially, the current flowing in the culture medium is measured with the counter electrode 21 and the working electrode 22. Here, the current flowing in the culture medium is the current flowing by the dissolved oxygen in the culture medium being reduced to water at the working electrode 22. Consequently, when the concentration of the dissolved oxygen in the culture medium is high, the current value becomes high, and when the concentration of the dissolved oxygen is low, the current value becomes also low. On the other hand, the consumption amount of oxygen by bacteria such as general live bacteria and Escherichia coli increases as it proliferates. Consequently, the concentration of the dissolved oxygen decreases and the current value also decreases as the concentration of the dissolved oxygen decreases.

Time for the decreased current value to reach a fixed threshold value is treated as required time, and this required time is measured with a required time measuring part 4 shown in FIG. 1. The number of bacteria included initially in the culture medium is calculated from the measured required time with a number of bacteria calculating part 5 shown in FIG. 1.

The oxygen electrode 2 had to be included only with a specified material such as expensive gold, platinum, silver, or titanium, otherwise the amount of current corresponding to the concentration of the dissolved oxygen could not be measured. Consequently, the cell 1 provided with the oxygen electrode 2 could not be formed inexpensively. Accordingly, in the oxygen electrode 2 in the present embodiment, inexpensive copper, stainless steel, etc. used in a general electrode is used as the electrode base material, and it has a structure that the surface of the electrode base material is covered by a surface metal layer of gold, platinum, titanium, etc. That is, in the oxygen electrode 2 in the present embodiment, the electrode base material is an unsuitable material for an oxygen electrode such as copper or stainless steel. However, the part contacting the culture medium is made to be an optimum material for an oxygen electrode by covering the surface with gold, etc., and the amount of current corresponding to the concentration of the dissolved oxygen is measured. Further, the oxygen electrode 2 in the present invention can be produced inexpensively because the bare part of the surface is an expensive material such as gold and the rest is an inexpensive material such as copper or stainless steel, and a general plating method can be used as the production method. Consequently, the oxygen electrode 2 in the present embodiment is suitable for disposing.

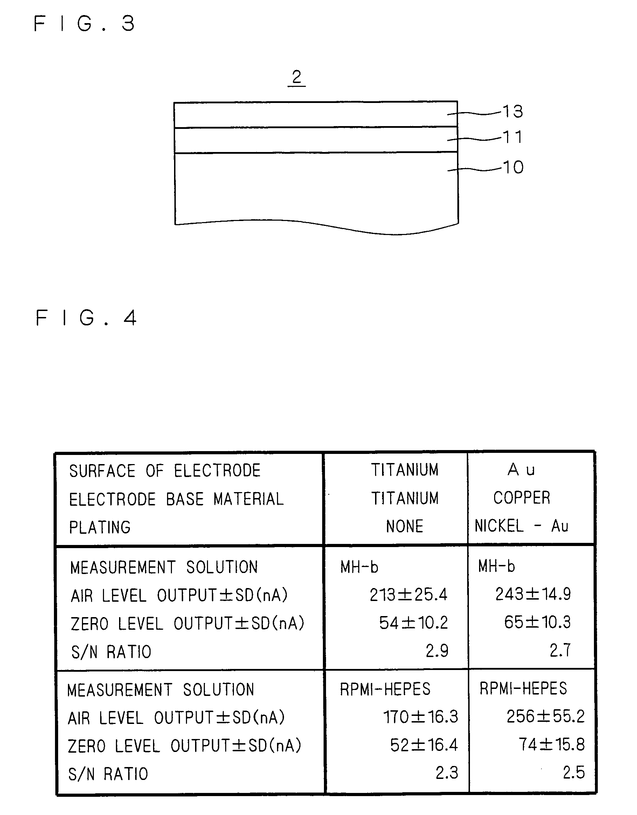

The oxygen electrode 2 in the present embodiment is explained as follows based on a specific example in which the electrode base material is copper and the surface metal layer is gold. Furthermore, it is provided with an under layer between the electrode base material and the surface metal layer because the adhesive property of the plating is bad when the electrode base material of copper is directly plated with gold. That is, the oxygen electrode 2 in the present embodiment has a configuration of an electrode base material of copper - a nickel layer - a surface metal layer of gold (also referred as an Au layer below). A sectional view of the oxygen electrode 2 in the present embodiment is shown in FIG. 3. In the oxygen electrode shown in FIG. 3, copper is used as an electrode base material 10 and a nickel layer 11 formed by electroplating is layered on the surface of the electrode base material. Moreover, an Au layer 13 is layered on the nickel layer 11 with electroplating. Here, the plating thicknesses of each layer are adopted to be for example 0.3 µm for the nickel layer 11 and 0.3 to 2.0 µm for the Au layer 13.

Next, it is shown below that the oxygen electrode 2 in the present embodiment can measure the amount of dissolved oxygen as well as the oxygen electrode including only a specific material such as gold, platinum, silver, or titanium. First, a table of a measurement result with the oxygen electrode including only the specific material and with the oxygen electrode 2 in the present embodiment is shown in FIG. 4. Here, titanium (Ti) is used for the oxygen electrode including only a specific material. Furthermore, the electrode surface is titanium because a surface metal layer is not formed in the oxygen electrode including only a specific material. On the other hand, the electroplating of nickel and Au is performed on the electrode base material of copper in the oxygen electrode 2 in the present embodiment as described above, and the electrode surface becomes Au. Compared with the oxygen electrode including only titanium, the oxygen electrode in the present embodiment becomes inexpensive.

Using each electrode, an air level output which is a measurement result of only a measurement solution, and a zero level output which is a measurement result of the measurement solution in which the dissolved oxygen is decreased by adding Escherichia coli are entered in a table shown in FIG. 4. Further, in the table shown in FIG. 4, an MH-b (a sensitive bouillon medium) which is a culture medium for bacteria and an RPMI-HEPES (in which a PRMI1640 medium is dissolved into HEPES (2-[4-(2-Hydroxyethyl)-1-piperadinyl] ethansulfonic acid)) which is a culture medium for cells are used in the table shown in FIG. 4.

In the result of measuring for a culture medium for bacteria with the oxygen electrode of titanium, the air level output is 213 +/- 25.4 nA, and the zero level output is 54 +/- 10.2 nA. Here, the number after the +/- indicates the standard deviation and is described as SD in FIG. 4. The ratio (S/N ratio) of the average value of the zero level outputs (54 nA) to the signal value 159 nA obtained by subtracting the average value of the air level outputs from the average value of the zero level outputs is about 2.9.

In the result of measuring for a culture medium for bacteria with the oxygen electrode 2 in the present embodiment, the air level output is 243 +/-14.9 nA, and the zero level output is 65 +/- 10.3 nA. The S/N ratio becomes about 2.7. That is, for a culture medium for bacteria, it is found that even the oxygen electrode 2 in the present embodiment can measure the amount of dissolved oxygen as well as the oxygen electrode of expensive titanium.

In the result of measuring for a culture medium for cells with the oxygen electrode of titanium, the air level output is 170 +/- 16.3 nA, and the zero level output is 52 +/- 16.4 nA. The S/N ratio becomes about 2.3. On the other hand, in the result of measuring with the oxygen electrode 2 in the present embodiment, the air level output is 256 +/- 55.2 nA, and the zero level output is 74 +/- 15.8 nA. The S/N ratio becomes about 2.5. From both results, for a culture medium for cells, it is found that even the oxygen electrode 2 in the present embodiment can measure the amount of dissolved oxygen as well as the oxygen electrode of expensive titanium.

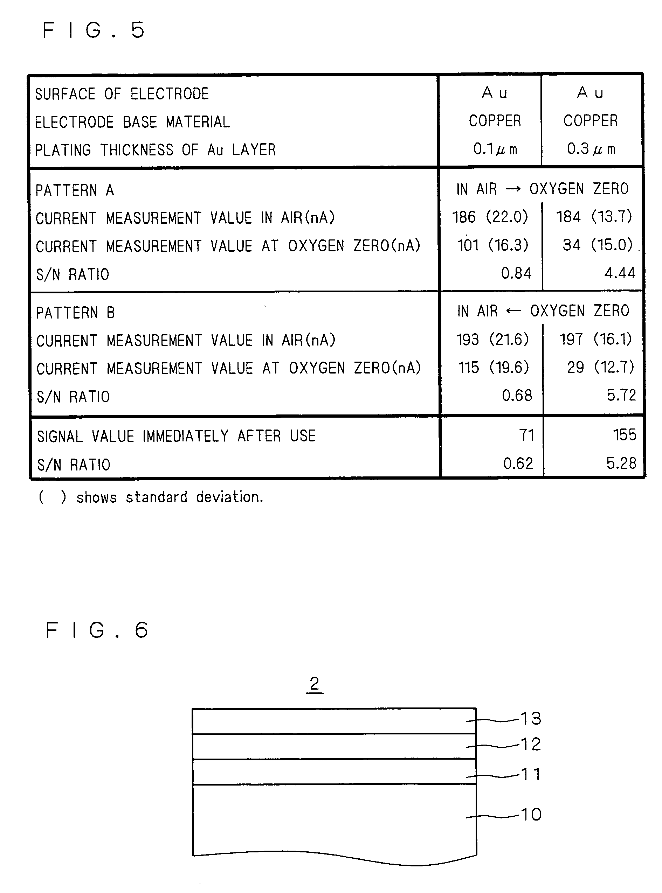

Next, a change in the current measurement value at the oxygen electrode 2 when the thickness of the Au layer 13 is changed is explained. The current measurement value in air and the current measurement value at oxygen zero for the oxygen electrode 2 equipped with the Au layers 13 of 0.1 µm and 0.3 µm thickness are shown in FIG. 5. In FIG. 5, the measurements are performed in a pattern in which the current measurement is performed after the current measurement in air (referred to as Pattern A below) and a pattern in which the current measurement is performed after the current measurement at oxygen zero (referred to as Pattern B below)

In FIG. 5, for the oxygen electrode 2 equipped with the Au layer 13 of 0.1 µm thickness in Pattern A, the average of the current measurement value in air is 186 nA, the standard deviation is 22.0, the average of the current measurement value at oxygen zero is 101 nA, and the standard deviation is 16.3. The ratio (S/N ratio) of a signal value of which the average of the current measurement value at oxygen zero is subtracted from the average of the current measurement value in air (85 nA) to the average of the current measurement value at oxygen zero (101 nA) becomes about 0.84. Similarly, for the oxygen electrode 2 equipped with the Au layer 13 of 0.1 µm thickness in Pattern B, the average of the current measurement value in air is 193 nA, the standard deviation is 21.6, the average of the current measurement value at oxygen zero is 115 nA, the standard deviation is 19.6, the signal value is 78 nA, and the S/N ratio becomes 0.68. Moreover, for the oxygen electrode 2 equipped with the Au layer 13 of 0.1 µm thickness, a signal value obtained from the oxygen measurement value immediately after use is 71 nA, and the S/N ratio becomes 0.62.

In FIG. 5, for the oxygen electrode 2 equipped with the Au layer 13 of 0.3 µm thickness in Pattern A, the average of the current measurement value in air is 184 nA, the standard deviation is 13.7, the average of the current measurement value at oxygen zero is 34 nA, and the standard deviation is 15.0. The ratio (S/N ratio) of a signal value of which the average of the current measurement value at oxygen zero is subtracted from the average of the current measurement value in air (150 nA) to the average of the current measurement value at oxygen zero (34 nA) becomes about 4.44. Similarly, for the oxygen electrode 2 equipped with the Au layer 13 of 0.3 µm thickness in Pattern B, the average of the current measurement value in air is 197 nA, the standard deviation is 16.1, the average of the current measurement value at oxygen zero is 29 nA, the standard deviation is 12.7, the signal value is 168 nA, and the S/N ratio becomes 5.72. Moreover, for the oxygen electrode 2 equipped with the Au layer 13 of 0.3 µm thickness, a signal value obtained from the oxygen measurement value immediately after use is 155 nA, and the S/N ratio becomes 5.28. Furthermore, the measurement is performed for each of eight oxygen electrodes 2 in FIG. 5.

As shown in FIG. 5, in a case of the oxygen electrode 2 equipped with the Au layer 13 of 0.1 µm thickness, the value of the S/N ratio is at most 1, and it is difficult to measure the current value by the dissolved oxygen. However, in a case of the oxygen electrode 2 equipped with the Au layer 13 of 0.3 µm thickness, the value of the S/N ratio is at most 4 and the current value by the dissolved oxygen can be measured without being buried in noise. Consequently, by making the Au layer 13, which is the surface metal layer, to have a thickness of at least 0.3 µm, the current value by the dissolved oxygen can be measured with good accuracy, and the measurement accuracy of the amount of dissolved oxygen can be improved.

As described above, even with the oxygen electrode 2 having a structure of which the inexpensive electrode base material of copper is covered with the Au layer, the amount of dissolved oxygen can be measured with almost the same accuracy as the oxygen electrode including only a specific material. The oxygen electrode 2 in the present embodiment only requires a layering of the Au layer on the electrode base material with a plating method, etc., and it can be formed with an inexpensive step. Furthermore, copper is used for the electrode base material in the present embodiment. However, other materials may be used, and for example, even with stainless steel which is resistant to corrosion, the oxygen electrode can be formed inexpensively. Further, in the oxygen electrode 2 in the present embodiment, the nickel layer 11 is used for the under layer. However, the present invention is not limited to this and other materials may be used as long as the adhesive property of the surface metal layer is improved and the material does not affect the measurement. Moreover, in the present invention, the surface metal layer may include platinum or titanium substituting for Au and for the manufacturing method, it is not limited to electroplating, and other methods such as a vapor deposition method may be used.

### (Embodiment 2)

The inexpensive formation of the oxygen electrode 2 in the present embodiment is made possible by making the oxygen electrode having a configuration of the electrode base material 10 of copper - the nickel layer 11 - the Au layer 13. However, in a case where the nickel layer 11 is layered on the surface of the electrode base material 10 with a general plating condition, there is a problem that pinholes are easily generated in the nickel layer 11. When pinholes are generated in the nickel layer 11, the pinholes could be generated also on the Au layer 13 layered on the top influenced by the nickel layer 11. When a large number of pinholes are generated in the Au layer 13, the surface of the electrode base material 10 becomes exposed, and in a case of measuring the amount of dissolved oxygen in the liquid culture medium, there is a problem that the difference between the initial current value of the measurement and the fixed threshold value becomes small.

There is a case where the difference between the initial current value of the measurement and the fixed threshold value becoming small is also caused mainly by the type of bacteria contained in a specimen and the culture medium to be selected, and when a large number of pinholes are generated in the oxygen electrode in this case, the difference between the initial current value of the measurement and the fixed threshold value becomes small and it becomes difficult to measure the mount of the dissolved oxygen with sufficient measurement accuracy. Consequently, it is desired to improve the measurement accuracy by reducing the pinholes generated in the oxygen electrode and sufficiently maintaining the difference between the initial current value of the measurement and the fixed threshold value.

Accordingly, in the oxygen electrode 2 in the present embodiment, by providing another under layer between the nickel layer 11 which is the under layer and the Au layer 13 which is the surface metal layer, the pinholes generated in the nickel layer 11 are covered with the other under layer and the pinholes to be formed in the surface metal layer are reduced. Consequently, the particle size to be formed on the surface of the other under layer is required to be made smaller than the particle size to be formed on the surface of the nickel layer 11 so that the pinholes generated in the nickel layer can be covered.

The oxygen electrode 2 in the present embodiment is explained specifically. Furthermore, the apparatus for measuring the number of bacteria in which the oxygen electrode 2 in the present embodiment is used is the same as the block diagram of the apparatus for measuring the number of bacteria shown in FIG. 1. Further, the cell 1 to be used in the present embodiment is also the same as the sectional perspective view of the cell 1 shown in FIG. 2. Consequently, a detailed explanation about the apparatus for measuring the number of bacteria and the cell 1 is omitted.

The structure of the oxygen electrode 2 which can be applied for any of the counter electrode 21, the working electrode 22, and the reference electrode 23 in the present embodiment is explained. A sectional view of the oxygen electrode 2 in the present embodiment is shown in FIG. 6. In the oxygen electrode 2 shown in FIG. 6, copper is used in the electrode base material 10. The nickel layer 11 of the under layer is layered on the surface of the electrode base material 10 with an electroplating method. Moreover, a ruthenium layer 12 which is the other under layer is layered on the nickel layer 11 with an electroplating method. On the surface of this ruthenium layer 12, a smaller particle size is formed than the particle size to be formed on the surface of the nickel layer 11.

Here, the particle size is a diameter of a crystalline particle to be formed in a metal layer such as the nickel layer 11 and the ruthenium layer 12, and the particle size in the optimum plating condition differs with the material. Further, the particle size can be adjusted to some degree with the plating condition. For example, the particle size of the nickel layer 11 is about 0.05 µm to 0.2 µm and the particle size of the ruthenium layer 12 is a particle size smaller than these values. Because the pinhole size generated in the nickel layer 11 is about 0.05 µm or more and is larger than the particle size, it becomes possible to cover the pinholes generated in the nickel layer 11 with the ruthenium layer 12. Further, the Au layer 13 is layered on the ruthenium layer 12 with a plating method. Here, the plating thicknesses of each layer are adopted to be for example 0.3 µm for the nickel layer 11, 0.2 µm for the ruthenium layer 12, and 0.3 to 2.0 µm for the Au layer 13.

Furthermore, in the structure of the oxygen electrode 2 in the present embodiment, the ruthenium layer 12 is layered between the nickel layer 11 and the Au layer 13. However, the present invention is not limited to this and it may be a metal other than ruthenium as long as it is a metal layer in which a smaller particle size is formed on the surface than the particle size to be formed on the surface of the nickel layer 11. Examples include rhodium (Rh) and palladium (Pd). Further, in the oxygen electrode 2 in the present embodiment, any of the nickel layer 11, the ruthenium layer 12, and the Au layer 13 to be layered on the electrode base material 10 is formed with a plating method. However, the present invention is not limited to this and other methods such as a vapor deposition method may be used.

In the nickel layer 11 formed with the general plating condition, a large number of pinholes are generated. In the oxygen electrode 2 in the present embodiment, by filling the pinholes with the ruthenium layer 12 which has a smaller particle size than the particle size to be formed on the surface of the nickel layer 11, the effect of the pinholes formed in the nickel layer 11 is prevented from being caused in the Au layer 13. Consequently, in the oxygen electrode 2 in the present embodiment, by making the oxygen electrode have a structure in which the ruthenium layer 12 is layered between the nickel layer 11 and the Au layer 13, the pinholes to be formed in the Au layer 13 can be reduced.

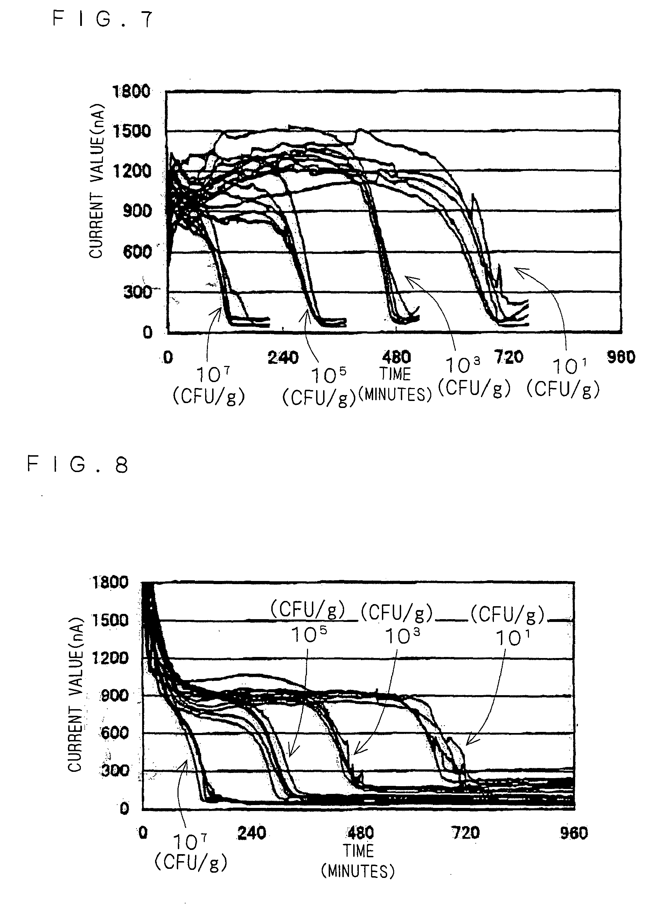

Next, when the amount of dissolved oxygen in a liquid culture medium is measured with the oxygen electrode 2, a profile is generally shown in which the current value decreases together with the decrease of the amount of dissolved oxygen after the constant current value flow at the initial stage of the measurement. Specifically, a graph of the amount of dissolved oxygen measured by using the oxygen electrode 2 in the present embodiment is shown in FIG. 7. Further, a graph of the amount of dissolved oxygen measured by using the oxygen electrode in which the nickel layer and the Au layer are layered on the electrode base material of copper is shown in FIG. 8. Escherichia coli (E. coli IFO3972) are included in the specimen used in the measurements of FIGs. 7 and 8, and a culture medium for general bacteria is used for the liquid culture medium. The initial numbers of the bacteria contained in the specimen are 10¹, 10³, 10⁵, and 10⁷ (unit: CFU/g). Furthermore, the x-axis of the graph is the measurement time (unit: minutes) and the y-axis is the current value (unit: nA).

By looking at the graph shown in FIG. 7, the average value of the constant current value flowing at the initial stage of the measurement (referred to as initial current value below) is about 1200 nA. However, by looking at the graph shown in FIG. 8, the average value of the initial current value is about 900 nA. Consequently, in a case where the fixed threshold values in FIGs. 7 and 8 are made to be about 300 nA, about 900 nA of the difference between the initial current value and the fixed threshold value can be maintained in a graph shown in FIG. 7. However, only about 600 nA can be maintained in a graph shown in FIG. 8.

Therefore, in a case where the amount of dissolved oxygen is measured using the oxygen electrode 2 in the present embodiment, it is found that the difference between the initial current value and the fixed threshold value is improved by about 300 nA. That is, in a case where the oxygen electrode 2 in which the pinholes are reduced as in the present embodiment is used, the tendency that the difference between the initial current value and the fixed threshold value becomes large is found experimentally compared to a case where the oxygen electrode in which the nickel layer and the Au layer are layered in the electrode base material. Consequently, it is considered that the difference between the initial current value and the fixed threshold value can be made large if the pinholes in the Au layer 13 can be reduced as in the oxygen electrode 2 in the present embodiment.

If a large difference between the initial current value and the fixed threshold value can be maintained as in a case where the amount of dissolved oxygen is measured using the oxygen electrode 2 in the present embodiment, even in a case where the difference between the initial current value and the fixed threshold value becomes small caused mainly by the type of bacteria contained in a specimen and the culture medium to be selected, the amount of dissolved oxygen can be measured with good accuracy.

As described above, because the oxygen electrode 2 in the present embodiment is equipped with the electrode base material 10 (copper), the nickel layer 11 to be layered on the surface of the electrode base material 10, the ruthenium layer 12 in which the smaller particle size is formed on the surface than a particle size to be formed on the surface of the nickel layer 11, and the Au layer 13 to be layered on the ruthenium layer 12, the pinholes generated in the Au layer are reduced, a large difference between the initial current value and the fixed threshold value can be maintained, and the measurement accuracy of the amount of dissolved oxygen can be improved.

### (Embodiment 3)

In Embodiment 2, copper was used in the electrode base material 10. However, the present invention is not limited to this and it may be other materials as long as it is an electrode base material 10 which is suitable for the measurement of the amount of dissolved oxygen. For example, in the present embodiment, stainless steel is used in the electrode base material 10. Furthermore, the apparatus for measuring the number of bacteria in which the oxygen electrode 2 in the present embodiment is used is the same as the block diagram of the apparatus for measuring the number of bacteria shown in FIG. 1. Further, the cell 1 to be used in the present embodiment is also the same as the sectional perspective view of the cell 1 shown in FIG. 2. Consequently, a detailed explanation about the apparatus for measuring the number of bacteria and the cell 1 is omitted.

Next, a sectional view of the oxygen electrode 2 in the present embodiment is basically the same as the sectional view shown in FIG. 6. However, in the respect that stainless steel is used in the electrode base material 10 instead of copper, it is different. Consequently, the nickel layer 11, the ruthenium layer 12, the Au layer 13, which are layered on the surface of the electrode base material 10 with a plating method, are the same as the embodiment 1.

Furthermore, the ruthenium layer 12 is layered between the nickel layer 11 and the Au layer 13 as well in the structure of the oxygen electrode 2 in the present embodiment. However, the present invention is not limited to this and it may be a metal other than ruthenium as long as it is a metal layer in which a smaller particle size is formed on the surface than the particle size to be formed on the surface of the nickel layer 11. Examples include rhodium (Rh) and palladium (Pd). Further, in the oxygen electrode 2 in the present embodiment, the nickel layer 11, the ruthenium layer 12, and the Au layer 13 to be layered on the electrode base material 10 are formed with a plating method. However, the present invention is not limited to this, and other methods such as a vapor deposition method may be used.

Because the oxygen electrode 2 in the present embodiment has a structure in which the ruthenium layer 12 is layered between the nickel layer 11 and the Au layer 13, the pinholes to be formed in the Au layer 13 can be reduced. Consequently, also in a case where measurement is performed using the oxygen electrode 2 in the present embodiment, the difference between the initial current value and the fixed threshold value can be made large, and even in a case where the difference between the initial current value and the fixed threshold value becomes small caused mainly by the type of bacteria contained in a specimen and the culture medium to be selected, the amount of dissolved oxygen can be measured with good accuracy.

Further, in a case of the oxygen electrode in which an inexpensive stainless steel is adopted for the electrode base material and the nickel layer and the Au layer are layered, cracks are generated in the nickel layer due to stress generated when the oxygen electrode is formed with shearing, etc., and accompanied with it, cracks could be generated in the Au layer 13. Because the oxygen electrode 2 in the present embodiment has a structure in which the ruthenium layer 12 is layered between the nickel layer 11 and the Au layer 13, cracks are difficult to be generated in the Au layer 13. It is considered that even though the cracks are generated in the nickel layer 11, the influence of the cracks in the nickel layer 11 does not reach to the Au layer 13 because there is the ruthenium layer 12.

Furthermore, in a case where the cracks are generated in the Au layer 13 of the oxygen electrode, it is considered that the nickel layer 11 or the electrode base material 10 (stainless steel) influences the measurement of the current value, a normal current value can not be measured, and there is a problem that an abnormal waveform is observed. However, by making the oxygen electrode have a structure of the oxygen electrode 2 in the present embodiment, the cracks are difficult to be generated in the Au layer 13, the nickel layer 11 or the electrode base material 10 (stainless steel) is not exposed by providing the ruthenium layer 12, the measurement of the current value becomes difficult to be influenced, and an accurate current waveform can be measured.

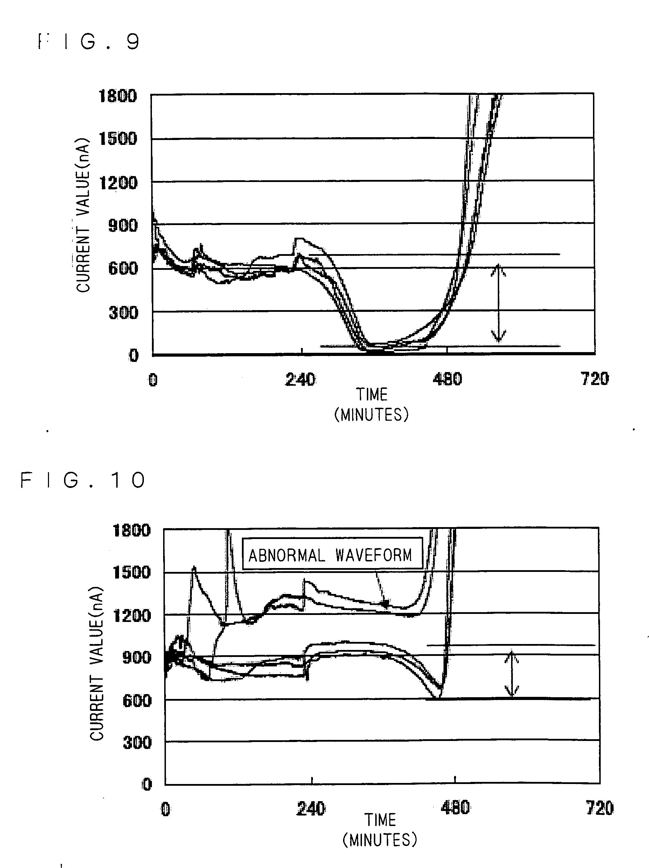

Specifically, a graph of the amount of dissolved oxygen measured by using the oxygen electrode 2 in the present embodiment is shown in FIG. 9. Further, a graph of the amount of dissolved oxygen measured by using the oxygen electrode in which the nickel layer and the Au layer are layered on the electrode base material of stainless steel is shown in FIG. 10. Differing from FIGs. 7 and 8, FIGs. 9 and 10 are cases where Escherichia coli or Escherichia coli group in a specific enzyme substrate medium which is a combination of a specific culture medium and a specific bacteria type was measured with the oxygen electrode. In this case, differing from the profiles shown in FIGs. 7 and 8, the profiles in FIGs. 9 and 10 become a profile that after a constant current value flows at the initial stage of the measurement, and then the current value decreases with the decrease of the amount of dissolved oxygen once, the current value increases.

Escherichia coli (E. coli IFO15034) is contained in the specimen used in the measurements in FIGs. 9 and 10, and colilert (trademark) is used for the liquid culture medium. The initial number of bacteria included in the specimen in FIG. 9 is 10² (unit: CFU/g), and the initial number of bacteria included in the specimen in FIG. 10 is 10² (unit: CFU/g). Furthermore, the x-axis of the graph is the measurement time (unit: minutes) and the y-axis is the current value (unit: nA).

By looking at the graph shown in FIG. 9, the average value of the initial current value is about 600 nA, and in a case where the fixed threshold value was set to be in the neighborhood of 0 nA, about 600 nA of the difference between the initial current value and the fixed threshold value can be maintained. However, by looking at the graph shown in FIG. 10, the average value of the initial current value is about 900 nA. However, the fixed threshold value can be only set to be about 600 nA. Consequently, in the graph shown in FIG. 10, only about 300 nA of the difference between the initial current value and the fixed threshold value can be maintained. Therefore, by making the oxygen electrode have a structure of the oxygen electrode 2 in the present embodiment, it is found that the difference between the initial current value and the fixed threshold value is improved by about 300 nA.

Further, in the graph shown in FIG. 10, an abnormal waveform in which the current value rises relatively from the early stage is detected besides a normal waveform, and cracks were generated in the Au layer in the oxygen electrode in which this abnormal waveform was detected. However, in a case where the oxygen electrode 2 in the present embodiment was used, the cracks were not generated in the Au layer and an abnormal wave form shown in FIG. 9 was not observed.

As described above, because the oxygen electrode 2 in the present embodiment is equipped with the electrode base material 10 (stainless steel), the nickel layer 11 to be layered on the surface of the electrode base material 10 (stainless steel), the ruthenium layer 12 in which a particle size smaller than the particle size formed on the surface of the nickel layer 11 is formed on the surface, and the Au layer 13 to be layered on the ruthenium layer 12, the pinholes generated in the Au layer 13 are reduced, a larger difference between the initial current value and the fixed threshold value can be maintained, and the measurement accuracy of the amount of dissolved oxygen can be improved. Further, the oxygen electrode 2 in the present embodiment has a structure in which cracks are difficult to be generated in the Au layer 13 and an accurate measurement can be performed without observing an abnormal waveform when the amount of dissolved oxygen is measured.

### (Embodiment 4)

The oxygen electrode in the present embodiment has a structure of electrode base material - nickel layer - Au layer. However, when the Au layer is formed directly on the nickel layer formed with a general plating condition, as described in Embodiment 2, there is a case where many pinholes are generated in the Au layer. Accordingly, in the oxygen electrode in the present embodiment, by performing a mechanical polishing treatment on the surface of the nickel layer 11 layered on the electrode base material, the pinholes in the Au layer are reduced without using the ruthenium layer 12. Hereupon, the mechanical polishing treatment is jet scrubbing treatment, brush scrubbing treatment, buffer polishing, etc.

The embodiment is explained using jet scrubbing treatment as follows. First, because the apparatus for measuring the number of bacteria and the cell to be used in the oxygen electrode in the present embodiment are the same as those shown in FIG. 1 and FIG. 2, a detailed explanation is omitted. Further, the sectional view of the oxygen electrode 2 in the present embodiment is the same as FIG. 3. Copper or stainless steel is used in the electrode base material 10 in the oxygen electrode 2 shown in FIG. 3. The nickel layer 11 is layered on the surface of this electrode base material 10 with a plating method. Moreover, the Au layer 13 is layered on the nickel layer 11 with a plating method.

The jet scrubbing treatment is performed on the nickel layer 11 in the present embodiment before the Au layer 13 is layered. The jet scrubbing treatment to be used in the present embodiment is generally used in the polishing of a Cu surface of a printed board and is a treatment to form the surface without unevenness by blowing a polishing agent on the workpiece. By applying this jet scrubbing treatment to the nickel layer 11, the pinholes formed on the surface of the nickel layer 11 can be filled with physical force, and the pinholes on the surface of the nickel layer 11 can be reduced.

If the pinholes formed on the surface of the nickel layer 11 are reduced, many pinholes are not formed in the Au layer 13 even if the Au layer 13 is layered directly on the nickel layer 11 with a plating method. That is, also in the oxygen electrode 2 in the present embodiment, the pinholes to be formed in the Au layer 13 can be reduced, and the difference between the initial current value and the fixed threshold value can be made large, the same as in Embodiment 2.

As described above, because the oxygen electrode 2 in the present embodiment is equipped with the electrode base material 10 (copper or stainless steel), the nickel layer 11 layered on the surface of the electrode base material 10 and in which the surface was treated with jet scrubbing, and the Au layer 13 to be layered on the nickel layer 11, the pinholes generated in the Au layer 13 are reduced, a large difference between the initial current value and the fixed threshold value can be maintained, and the measurement accuracy of the amount of dissolved oxygen can be improved.

Furthermore, the mechanical polishing treatment is performed on the nickel layer 11 which is an under layer in the present embodiment. However, the mechanical polishing treatment may be also performed on the surface of the electrode base material 10 and the surface of the surface metal layer 13. By performing the mechanical polishing treatment on the surface of the electrode base material 10, unevenness on the surface of the electrode base material 10 is relieved and defects such as pinholes to be formed in the surface metal layer 13 can be reduced. Further, by performing the mechanical polishing treatment on the surface of the surface metal layer 13, the defects such as pinholes formed on the surface of the surface metal layer 13 can be corrected and reduced after the fact.

### (Embodiment 5)

Also in the oxygen electrode in the present embodiment, the Au layer is directly formed on the nickel layer the same in Embodiment 4. However, in the oxygen electrode in the present embodiment, the plating method of the nickel layer is improved without performing the jet scrubbing treatment to the nickel layer as in Embodiment 3. Furthermore, because the apparatus for measuring the number of bacteria and the cell to be used in the oxygen electrode in the present embodiment are the same as those shown in FIG. 1 and FIG. 2, a detailed explanation is omitted. Further, because the sectional view of the oxygen electrode 2 in the present embodiment is the same as FIG. 3, a detailed explanation is omitted.

As in FIG. 3, the nickel layer 11 is layered on the electrode base material 10 (copper or stainless steel) also in the present embodiment. However, the nickel layer 11 in the present embodiment is formed with a supercritical plating method which differs from the conventional plating method.

Here, the supercritical plating method is a method in which a plating bath in which a surfactant and carbon dioxide are placed and made turbid is used, and by making the carbon dioxide achieve a supercritical state, the electroplating is performed. Furthermore, the supercritical state refers to a state in which temperature and pressure are located above the critical point of the temperature, pressure, and entropy chart in a phase diagram. Specifically, in the supercritical plating method, first a plating bath for nickel and a surfactant of a fixed ratio to the plating bath are placed in a reaction bath which can be made to have high pressure, then the cathode is installed and sealed with the degreased electrode base material 10 (copper or stainless steel), and the anode is installed and sealed with a pure nickel plate. After the temperature of the thermostatic bath is increased to 32°C or more, the pressure in the reaction bath is increased to 8 MPa or more with a liquid feeding pump and a pressure regulator. Moreover, carbon dioxide is sealed in the reaction bath, and carbon dioxide, the surfactant, and the plating bath are stirred with a stirrer and made turbid. Then, the nickel plating is performed by supplying a fixed current value between the cathode and the anode for a few minutes.

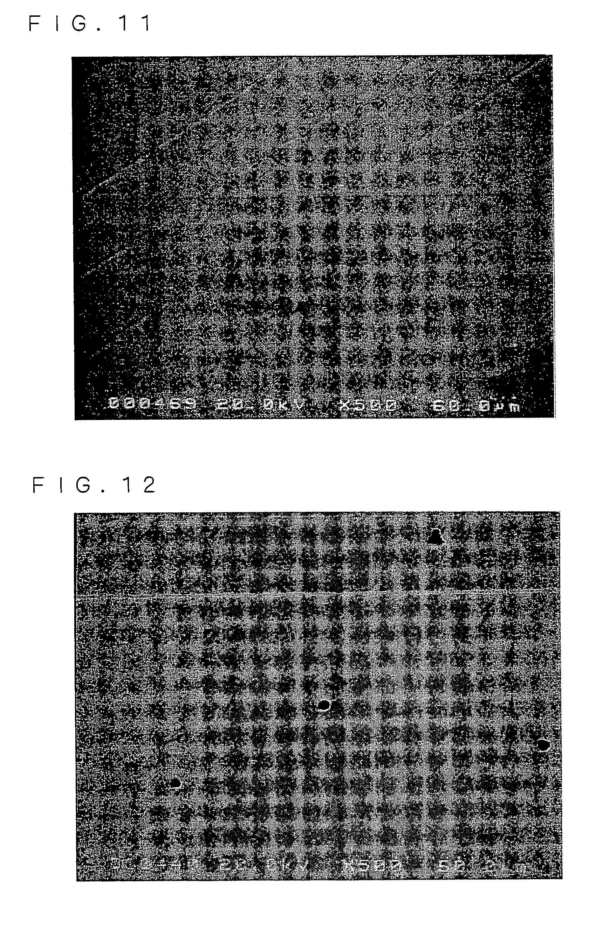

The nickel layer 11 is formed finely without the pinholes using the supercritical plating method, and the particle size to be formed on the surface become small. A SEM picture of the surface of the nickel layer 11 by the supercritical plating method is shown in FIG. 11, and another SEM picture of the surface of the nickel layer 11 by the conventional plating method is shown in FIG. 12. It can be found that the surface of the nickel layer 11 in FIG. 11 is fine, the pinholes are not formed, and almost no unevenness is formed. However, in the surface of the nickel layer 11 in FIG. 12, many pinholes are formed and a state in which unevenness is formed is shown. Furthermore, FIGs. 11 and 12 show the surface of the layer 11 magnified at x500.

As found from FIGs. 11 and 12, because the pinholes to be formed on the surface of the nickel layer 11 can be reduced and the particle size can be made small using the supercritical plating method, many pinholes are not formed in the Au layer 13 even if the Au layer 13 is directly formed on the nickel layer 11 by the plating method. Thus, if the pinholes in the Au layer 13 can be reduced in the oxygen electrode 2 in the present embodiment, it is considered that the difference between the initial current value and the fixed threshold value can be made large, the same as in Embodiment 1 and Embodiment 2.

As described above, because the oxygen electrode 2 in the present embodiment is equipped with the electrode base material 10 (copper or stainless steel), the nickel layer 11 layered on the surface of the electrode base material 10, and the Au layer 13 to be layered on the nickel layer 11, and in which the nickel layer 11 is formed with the supercritical plating, the pinholes generated in the Au layer 13 are reduced, a large difference between the initial current value and the fixed threshold value can be maintained, and the measurement accuracy of the amount of dissolved oxygen can be improved.

Furthermore, one of the causes for the pinholes to be formed in the nickel layer 11 is hydrogen gas being generated on the surface of the nickel layer 11. Because this hydrogen gas is more compatible with carbon dioxide than water, it is considered that the pinholes can be reduced when the nickel layer 11 is electroplated in carbon dioxide. Therefore, the nickel layer 11 to be adopted in the present embodiment is not limited to one which is formed with supercritical plating, and the nickel layer 11 formed with the electroplating performed in carbon dioxide may be used.

This invention has been explained in detail. However, the above-described explanation is an example in all aspects, and this invention is not limited thereto. It is comprehended that an infinite number of modified examples which are not exemplified can be supposed without departing from the scope of this invention.

## Claims

1. An oxygen electrode (2) used to measure an amount of dissolved oxygen in a liquid culture medium, comprising:
an electrode base material (10); and
a surface metal layer (13) being any one of Au, Pt, and Ti, and covering a surface of said electrode base material (10).

2. The oxygen electrode (2) according to claim 1, wherein
a mechanical polishing treatment is performed on at least one of the surfaces of said electrode base material (10) and said surface metal layer (13).

3. The oxygen electrode (2) according to claim 1, further comprising: a first under layer (11) between said electrode base material (10) and said surface metal layer (13), wherein
said surface metal layer (13) is Au, and is formed on said first under layer (11) with electroplating.

4. The oxygen electrode (2) according to claim 2, further comprising a first under layer (11) between said electrode base material (10) and said surface metal layer (13), wherein
said surface metal layer (13) is Au, and is formed on said first under layer (11) with electroplating.

5. The oxygen electrode (2) according to claim 3, wherein
said first under layer (11) is nickel.

6. The oxygen electrode (2) according to claim 4, wherein
said first under layer (11) is nickel.

7. The oxygen electrode (2) according to claim 5, wherein
said surface metal layer (13) is at least 0.3 µm.

8. The oxygen electrode (2) according to claim 6, wherein
said surface metal layer (13) is at least 0.3 µm.

9. The oxygen electrode (2) according to any one of claims 3 to 8, wherein
a mechanical polishing treatment is performed on the surface of said first under layer (11).

10. The oxygen electrode (2) according to any one of claims 3 to 8, wherein
said first under layer (11) is formed with the electroplating performed in carbon dioxide.

11. The oxygen electrode (2) according to claim 10, wherein
said carbon dioxide is in a supercritical state.

12. The oxygen electrode (2) according to any one of claims 3 to 8, further comprising a second under layer (12) between said first under layer (11) and said surface metal layer (13), wherein
a smaller particle size is formed on the surface of said second under layer (12) than the particle size formed on the surface of said first under layer (11).

13. The oxygen electrode (2) according to claim 12, wherein
said second under layer (12) is any one of ruthenium, rhodium, and palladium.
